# EUROPEAN PATENT APPLICATION

(11) **EP 4 765 589 A1**
(43) Date of publication of application: **24.06.2026**
(21) Application number: 24864409.8
(22) Date of filing: 21.08.2024
(51) Int. Cl.: H02K 3/28, H02K 3/50, H02K 3/48, H02K 1/16

(54) **FLAT-WIRE WINDING HAVING WELDING FACES ON FOLDED LINE SEGMENTS, FLAT-WIRE ELECTRIC MOTOR AND STATOR, AND POWER ASSEMBLY**

(30) Priority: 16.09.2023 CN 202311202167
(71) Applicant: Huawei Digital Power Technologies Co., Ltd., Shenzhen, Guangdong 518043 (CN)
(72) Inventor: CONG, Qi, Shenzhen, Guangdong 518043 (CN); WU, Chaoqiang, Shenzhen, Guangdong 518043 (CN); HUANG, Weihua, Shenzhen, Guangdong 518043 (CN); REN, Jiliang, Shenzhen, Guangdong 518043 (CN)
(74) Representative: Gill Jennings & Every LLP
(86) International application number: PCT/CN2024/113661
(87) International publication number: WO 2025/055686

(57) **Abstract**

This application provides a flat wire winding including a folded segment with a welding surface, a flat wire motor, a stator, and a powertrain, to reduce an axial size of the flat wire motor. The stator of the flat wire motor includes a stator core and a stator winding, the stator winding includes a plurality of flat wire windings, and each flat wire winding includes at least one wire segment. Each wire segment includes one straight segment and two folded segments, the straight segment is configured to be embedded in a stator slot of the stator core in the flat wire motor, and the folded segments are configured to be exposed outside the stator slot. An extension direction of each folded segment intersects an extension direction of the straight segment, and extension directions of the two folded segments are different. An end portion that is of at least one folded segment and that is away from the straight segment includes a welding surface, and a cross-sectional area of the end portion is less than both a cross-sectional area of the straight segment and a cross-sectional area of each folded segment.

## Description

### CROSS-REFERENCE TO RELATED APPLICATIONS

This application claims priority to Chinese Patent Application No. 202311202167.1, filed with the China National Intellectual Property Administration on September 16, 2023 and entitled "FLAT WIRE WINDING INCLUDING FOLDED SEGMENT WITH WELDING SURFACE, FLAT WIRE MOTOR, STATOR, AND POWERTRAIN", which is incorporated herein by reference in its entirety.

### TECHNICAL FIELD

This application relates to the field of motor technologies, and in particular, to a flat wire winding including a folded segment with a welding surface, a flat wire motor, a stator, and a powertrain.

### BACKGROUND

Currently, a flat wire winding is usually used for a stator winding of a drive motor of an electric vehicle to increase a slot fill factor. Because steps such as twisting and welding are required in a manufacturing process of the flat wire winding, a size of the flat wire winding protruding from a stator core in an axial direction is large, and axial sizes of the stator winding and a flat wire motor are increased. This is not conducive to a structure layout of the flat wire motor, and further affects performance of the flat wire motor.

### SUMMARY

Embodiments of this application provide a flat wire winding including a folded segment with a welding surface, a flat wire motor, a stator, and a powertrain, to reduce a size of the flat wire winding protruding from an end portion of a stator core. This helps reduce an axial size of the flat wire motor, and improve a structure layout of the flat wire motor, thereby improving performance of the flat wire motor.

According to a first aspect, this application provides a stator of a flat wire motor. The stator of the flat wire motor provided in this application includes a stator core and a stator winding. The stator winding includes a plurality of flat wire windings, at least one flat wire winding includes at least one wire segment, and each wire segment includes one straight segment and two folded segments. The straight segment is configured to be embedded in a stator slot of the stator core in the flat wire motor. The two folded segments are configured to be exposed outside the stator slot. An extension direction of each folded segment intersects an extension direction of the straight segment, and extension directions of the two folded segments are different. An end portion that is of at least one folded segment and that is away from the straight segment includes a welding surface, and a cross-sectional area of the end portion is less than a cross-sectional area of the straight segment.

In the stator provided in this application, before the flat wire winding is embedded in the stator slot, a structure having at least one wire segment may be formed through a bending process, and a shape of the folded segment has been formed. After the flat wire winding is embedded in the stator slot in a radial direction of the stator core, the folded segment may be exposed outside the stator slot, and no process like twisting or flaring is required. Therefore, an end for tool clamping does not need to be reserved at an end portion of the flat wire winding. This reduces a size of the end winding, helps reduce an axial size of the flat wire motor, and improves a structure layout of the flat wire motor. In the stator provided in this application, the cross-sectional area of the end portion of the folded segment of the wire segment of the flat wire winding is greater than the cross-sectional area of the straight segment. This can improve welding stability and operation convenience, thereby improving performance of the flat wire motor.

In an embodiment, an end face that is of an end portion of one folded segment and that faces a circumferential direction of the flat wire motor includes one tangent plane. The tangent plane includes one welding surface, and an area of the tangent plane is greater than a cross-sectional area of the folded segment. In the stator provided in this application, the end face that is of the end portion of the folded segment of the flat wire winding and that faces the circumferential direction of the flat wire motor is cut to form the tangent plane, and the area of the tangent plane is greater than a cross-sectional area of the wire segment. This can help increase an area of the welding surface, and improve welding stability and operation convenience, thereby improving performance of the flat wire motor. In addition, the end face of the end portion of the folded segment is cut to form the welding surface, and there is no need to use a process like twisting or flaring or to reserve an end for tool clamping. This reduces a size of the end winding, helps reduce the axial size of the flat wire motor, and further facilitates operation of welding in the circumferential direction of the flat wire motor, thereby improving welding stability and operation convenience.

In an embodiment, the one tangent plane or the one welding surface includes two side edges arranged opposite to each other in a thickness direction of the folded segment, and a length of each of the two side edges is greater than a width of the folded segment. In the stator provided in this application, the end face of the end portion of the folded segment of the flat wire winding is cut in a radial direction of the flat wire motor to form the tangent plane, so that not only the size of the end portion winding can be reduced, but also the axial size of the flat wire motor can be reduced. This may further help increase the area of the welding surface, and improve welding stability and operation convenience.

In an embodiment, a side surface that is of an end portion of one folded segment and that faces the radial direction of the flat wire motor includes one tangent plane. The tangent plane includes one welding surface, and an area of the tangent plane is greater than a cross-sectional area of the folded segment. In the stator provided in this application, the side surface that is of the end portion of the folded segment of the flat wire winding and that faces the radial direction of the flat wire motor is cut to form the tangent plane, and the area of the tangent plane is greater than the cross-sectional area of the wire segment. This can help increase the area of the welding surface, and improve welding stability and operation convenience, thereby improving performance of the flat wire motor. In addition, the side surface of the end portion of the folded segment is cut to form the welding surface, and there is no need to use a process like twisting or flaring or to reserve an end for tool clamping. This reduces the size of the end winding, helps reduce the axial size of the flat wire motor, and further facilitates operation of welding in the radial direction of the flat wire motor, thereby improving welding stability and operation convenience.

In an embodiment, the one tangent plane or the one welding surface includes two side edges arranged opposite to each other in an extension direction of the folded segment, and a length of each of the two side edges is greater than a width of the folded segment. In the stator provided in this application, the side surface of the end portion of the folded segment of the flat wire winding is cut to form the tangent plane, so that not only the size of the end winding can be reduced, but also the axial size of the flat wire motor can be reduced. This may further help increase the area of the welding surface, and improve welding stability and operation convenience.

In an embodiment, an included angle between a folded segment and a straight segment in one wire segment is greater than 90 degrees, and two folded segments in the wire segment are separately connected to the straight segment via a bending segment. In the flat wire winding provided in this application, the folded segment is connected to the straight segment via the bending segment, to form the included angle greater than 90 degrees, so that a size of the flat wire winding protruding from the end portion of the stator core can be reduced, and the axial size of the flat wire motor is reduced.

In an embodiment, the flat wire winding includes a plurality of wire segments that are sequentially connected. In two wire segments connected to each other, a folded segment of a wire segment is connected to a folded segment of the other wire segment via another bending segment, the size of the flat wire winding protruding from the end portion of the stator core can be reduced, and the axial size of the flat wire motor is reduced.

In an embodiment, an included angle between two folded segments connected to each other in two wire segments connected to each other is less than an included angle between each folded segment and a straight segment in a same wire segment, so that the size of the flat wire winding protruding from the end portion of the stator core can be reduced, and the axial size of the flat wire motor is reduced.

In an embodiment, the stator core includes a plurality of arc-shaped stator core blocks, and each arc-shaped stator core block includes at least one stator slot. The at least one stator slot of each arc-shaped stator core block is respectively configured to be embedded in at least one straight segment, and a length of each straight segment is greater than a length of the arc-shaped stator core block in an axial direction of the flat wire motor. The plurality of arc-shaped stator core blocks embedded in the at least one straight segment are sequentially spliced to form the stator core. In the stator provided in this application, after the flat wire winding is embedded in the stator slot of the arc-shaped stator core block in the radial direction of the stator core, the plurality of arc-shaped stator core blocks are spliced to form the stator core. Compared with a solution in which the flat wire winding is inserted in the radial direction of the stator core, no process like twisting or flaring is required. Therefore, an end used for tool clamping does not need to be reserved at the end portion of the flat wire winding. This reduces the size of the end winding, helps reduce the axial size of the flat wire motor, and improves the structure layout of the flat wire motor.

In an embodiment, the stator core includes a plurality of stator teeth and an annular yoke part. In a radial direction of the stator, an inner surface of the yoke part faces a central hole of the stator core, an outer surface of the yoke part faces away from the central hole of the stator core, and the inner surface of the yoke part includes a plurality of mounting grooves. The plurality of mounting grooves are spaced from each other in a circumferential direction of the stator. A gap between any two adjacent stator teeth in the circumferential direction of the stator is used to form the stator slot, and each stator slot is used to embed at least one straight segment in the radial direction of the stator. The plurality of stator teeth embedded in the at least one straight segment are configured to be embedded in the plurality of mounting grooves of the yoke part in an axial direction of the stator.

According to a second aspect, this application provides a flat wire motor. The flat wire motor provided in this application includes a rotor and the stator according to the first aspect and embodiments of the first aspect. A welding surface of a wire segment of one flat wire winding is welded to a welding surface of a wire segment of another flat wire winding. Welding surfaces of two wire segments welded to each other are arranged adjacently in a radial direction of the flat wire motor or in a circumferential direction of the flat wire motor. In the flat wire motor provided in this application, the welding platforms of the two wire segments welded to each other are arranged adjacently in the radial direction of the flat wire motor or in the circumferential direction of the flat wire motor, so that a size of the flat wire winding protruding from an end portion of the stator core can be reduced, and an axial size of the flat wire motor can be reduced.

According to a third aspect, this application provides a powertrain. The powertrain provided in this application may be applied to an electric vehicle to provide power for the electric vehicle. The powertrain includes the flat wire motor according to any one of the second aspect and embodiments and either a reducer or a gearbox. A motor shaft of the flat wire motor is configured to be in transmission connection to an input shaft of the reducer or an input shaft of the gearbox. For beneficial effect of the powertrain provided in this application, refer to the descriptions of the first aspect, the second aspect, and embodiments of the first aspect and the second aspect. Details are not described again.

According to a fourth aspect, this application provides a flat wire winding including a folded segment with a welding surface. The flat wire winding provided in this application includes at least one wire segment, and each wire segment includes one straight segment and two folded segments. The straight segment is configured to be embedded in a stator slot of a stator core in a flat wire motor. The two folded segments are configured to be exposed outside the stator slot. An extension direction of each folded segment intersects an extension direction of the straight segment, and extension directions of the two folded segments are different. An end portion that is of at least one folded segment and that is away from the straight segment includes a welding surface, and a cross-sectional area of the end portion is less than a cross-sectional area of the straight segment.

In the stator provided in this application, before the flat wire winding is embedded in the stator slot, a structure having at least one wire segment may be formed through a bending process, and a shape of the folded segment has been formed. After the flat wire winding is embedded in the stator slot in a radial direction of the stator core, the folded segment may be exposed outside the stator slot, and no process like twisting or flaring is required. Therefore, an end for tool clamping does not need to be reserved at an end portion of the flat wire winding. This reduces a size of the end winding, helps reduce an axial size of the flat wire motor, and improves a structure layout of the flat wire motor. In the stator provided in this application, an area of the welding surface of the end portion of the folded segment of the wire segment of the flat wire winding is greater than a cross-sectional area of the wire segment. This can improve welding stability and operation convenience, thereby improving performance of the flat wire motor.

### BRIEF DESCRIPTION OF DRAWINGS

FIG. 1 is a diagram of a structure of an electric vehicle according to an embodiment of this application;
FIG. 2 is a diagram of a structure of a powertrain according to an embodiment of this application;
FIG. 3a is a diagram of a structure of a stator according to an embodiment of this application;
FIG. 3b is an enlarged view of an area A in FIG. 3a;
FIG. 3c is a main view of a stator according to an embodiment of this application;
FIG. 4a is a diagram of a structure of a flat wire winding according to an embodiment of this application;
FIG. 4b is a diagram of a structure of a flat wire winding embedded in a stator slot according to an embodiment of this application;
FIG. 4c is a diagram of a structure of a stator core block according to an embodiment of this application;
FIG. 5a is a diagram of a simplified structure of a flat wire winding according to an embodiment of this application;
FIG. 5b is a diagram of a structure of a flat wire winding according to an embodiment of this application;
FIG. 5c is a diagram of a structure of a flat wire winding according to an embodiment of this application;
FIG. 5d is a diagram of a structure of a flat wire winding according to an embodiment of this application;
FIG. 6 is a diagram of a welding principle of a flat wire winding according to an embodiment of this application;
FIG. 7 is a diagram in which a plurality of flat wire windings are welded to form a stator winding according to an embodiment of this application;
FIG. 8a is a diagram of a structure of a flat wire winding according to an embodiment of this application;
FIG. 8b is a diagram of a partial structure of a flat wire winding according to an embodiment of this application;
FIG. 8c is a main view of a flat wire winding according to an embodiment of this application;
FIG. 8d is a main view in which two flat wire windings are welded in a circumferential direction of a stator core according to an embodiment of this application;
FIG. 8e is a top view in which end portions of two flat wire windings are welded in a circumferential direction of a stator core according to an embodiment of this application;
FIG. 9a is a diagram of a structure of a flat wire winding according to an embodiment of this application;
FIG. 9b is a diagram of a partial structure of a flat wire winding according to an embodiment of this application;
FIG. 9c is a main view of a flat wire winding according to an embodiment of this application;
FIG. 9d is a main view in which two flat wire windings are welded in a radial direction of a stator core according to an embodiment of this application;
FIG. 9e is a top view in which end portions of two flat wire windings are welded in a circumferential direction of a stator core according to an embodiment of this application;
FIG. 10a is a diagram of a structure in which end portions of two flat wire windings are welded in a circumferential direction of a stator core according to an embodiment of this application;
FIG. 10b is a diagram of a structure in which end portions of two flat wire windings are welded in a radial direction of a stator core according to an embodiment of this application;
FIG. 11a is a diagram of a structure of a flat wire winding according to an embodiment of this application;
FIG. 11b is a diagram of a simplified structure of a flat wire winding according to an embodiment of this application;
FIG. 11c is a diagram of a welding principle of a flat wire winding according to an embodiment of this application;
FIG. 12a is a diagram of a structure of a flat wire winding according to an embodiment of this application;
FIG. 12b is a diagram of a simplified structure of a flat wire winding according to an embodiment of this application;
FIG. 12c is a diagram of a welding principle of a flat wire winding according to an embodiment of this application;
FIG. 13a is another diagram of a motor stator according to an embodiment of this application;
FIG. 13b is an enlarged view of an area B in FIG. 13a;
FIG. 13c is another diagram of a motor stator according to an embodiment of this application; and
FIG. 13d is another diagram of a motor stator according to an embodiment of this application.

### DESCRIPTION OF EMBODIMENTS

A stator of a motor generally includes a stator core and a stator winding. The stator core includes a central hole for accommodating a rotor and a stator slot connected to the central hole. The stator winding is wound on the stator core, and a part of a conducting wire used to form the stator winding is located in the stator slot, and a part of the conducting wire is located at an axial end outside the stator slot. A height of the stator winding at an axial end portion of the stator affects a size of the stator, and also affects a structure of the motor. In a conventional flat-wire stator winding, the conducting wire of the stator winding is inserted into the stator slot in an axial direction of the stator core, and then the conducting wire is processed into a preset shape through flaring, twisting, and cutting. Then, conducting wires are sequentially welded to form the stator winding. For a process like flaring or twisting for the conducting wire, an end portion that is of the conducting wire and that extends out of the stator slot needs to have a specific extension section, to facilitate clamping of a fixture to implement a process operation. The extension section causes a high height of an end winding of the stator winding, which affects an axial size of the stator.

In view of this, embodiments of this application provide a flat wire winding including a folded segment with a welding surface, a flat wire motor, a stator, and a powertrain, to reduce a size of the flat wire winding protruding from an end portion of the stator core. This helps reduce an axial size of the flat wire motor, and improve a structure layout of the flat wire motor, thereby improving performance of the flat wire motor.

To make objectives, technical solutions, and advantages of this application clearer, the following further describes this application in detail with reference to accompanying drawings.

Terms used in the following embodiments are merely intended to describe specific embodiments, but are not intended to limit this application. Terms "one", "a", "the foregoing", "the", and "the one" of singular forms used in this specification and the appended claims of this application are also intended to include plural forms like "one or more", unless otherwise specified in the context clearly.

Reference to "an embodiment", "some embodiments", or the like described in this specification indicates that one or more embodiments of this application include a specific feature, structure, or characteristic described with reference to embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. Terms "include", "contain", "have", and their variants all mean "include but are not limited to", unless otherwise specifically emphasized in another manner.

In an embodiment, this application provides a flat wire winding including a folded segment with a welding surface. In this application, the flat wire winding including the folded segment with the welding surface includes at least one wire segment, and each wire segment includes one straight segment and two folded segments. An extension direction of each folded segment intersects an extension direction of the straight segment, and extension directions of the two folded segments are different. An end portion that is of at least one folded segment and that is away from the straight segment includes a welding surface, and a cross-sectional area of the end portion is less than both a cross-sectional area of the straight segment and a cross-sectional area of each folded segment.

In an embodiment, this application provides a stator of a flat wire motor. In this application, the stator includes a stator core and a stator winding. The stator winding includes a plurality of flat wire windings. At least one flat wire winding includes at least one wire segment, and each wire segment includes one straight segment and two folded segments. An extension direction of each folded segment intersects an extension direction of the straight segment, and extension directions of the two folded segments are different. An end portion that is of at least one folded segment and that is away from the straight segment includes a welding surface, and a cross-sectional area of the end portion is less than both a cross-sectional area of the straight segment and a cross-sectional area of each folded segment.

In an embodiment, this application provides a flat wire motor. In this application, the flat wire motor includes a rotor and a stator. The stator includes a stator core and a stator winding. The stator winding includes a plurality of flat wire windings. In an embodiment, at least one flat wire winding includes at least one wire segment, and each wire segment includes one straight segment and two folded segments. An extension direction of each folded segment intersects an extension direction of the straight segment, and extension directions of the two folded segments are different. An end portion that is of at least one folded segment and that is away from the straight segment includes a welding surface, and a cross-sectional area of the end portion is less than both a cross-sectional area of the straight segment and a cross-sectional area of each folded segment. Welding surfaces of two wire segments welded to each other are arranged adjacently in a radial direction of the flat wire motor or in a circumferential direction of the flat wire motor.

In an embodiment, this application provides a powertrain. In this application, the powertrain includes the flat wire motor provided in embodiments of this application and either a reducer or a gearbox. A motor shaft of the flat wire motor is configured to be in transmission connection to an input shaft of the reducer or an input shaft of the gearbox.

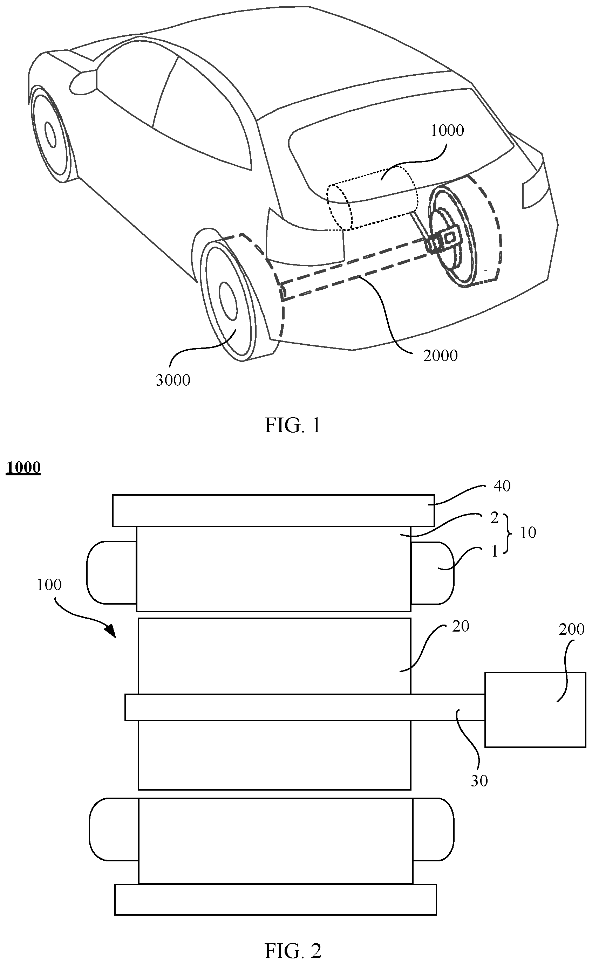

FIG. 1 is a diagram of an electric vehicle according to an embodiment of this application. Refer to FIG. 1. The electric vehicle provided in this embodiment of this application includes a powertrain 1000, a transmission mechanism 2000, and wheels 3000. The powertrain 1000 drives the wheel 3000 via the transmission mechanism 2000. The powertrain 1000 is configured to convert electric energy into mechanical energy. The transmission mechanism 2000 is configured to be in transmission connection to the powertrain 1000 and the wheel 3000.

FIG. 2 is a diagram of the powertrain according to an embodiment of this application. As shown in FIG. 2, the powertrain 1000 provided in this embodiment of this application includes a flat wire motor 100 and a reducer 200. The flat wire motor 100 is in transmission connection to the reducer 200. The flat wire motor 100 is configured to drive the transmission mechanism 2000 of the electric vehicle via the reducer 200. In this embodiment of this application, the reducer 200 may alternatively be a gearbox.

As shown in FIG. 2, the flat wire motor 100 includes a stator 10, a rotor 20, a motor shaft 30, and a housing 40. The motor shaft 30 is in transmission connection to the reducer 200. The stator 10 includes a stator winding 1 and a stator core 2. The stator core 2 is configured to fasten or wind the stator winding 1, and the housing 40 is configured to fasten and accommodate the stator core 2. The rotor 20 is configured to rotate relative to the stator 10 and drive the motor shaft 30.

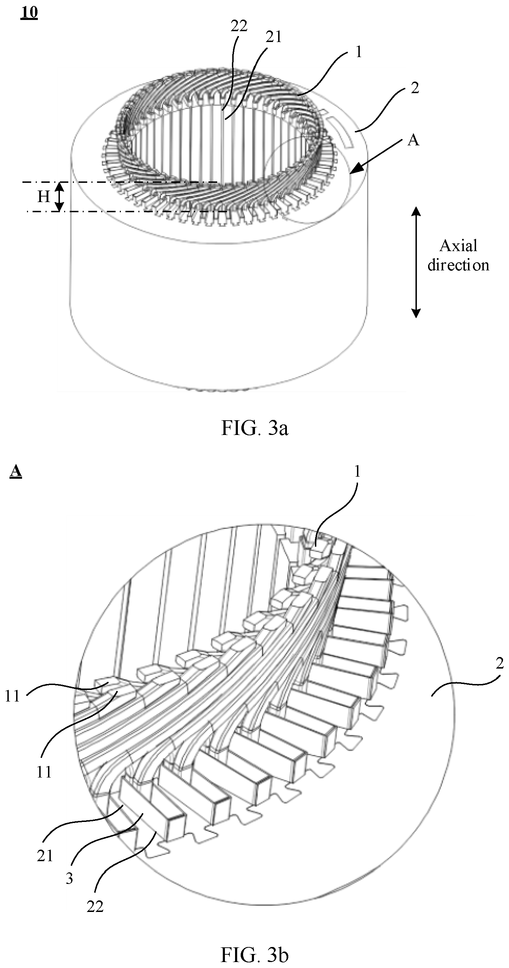

FIG. 3a shows a structure of the stator 10. As shown in FIG. 3a, the stator 10 includes the stator core 2 and the stator winding 1. The stator core 2 is annular. An inner side of the stator core 2 includes a plurality of stator teeth 21. In a circumferential direction of the stator core 2, a stator slot 22 is formed between any two adjacent stator teeth 21. The stator winding 1 is wound around the stator teeth 21 of the stator core 2.

A part of the stator winding 1 is located in the stator slot 22, and the other part of the stator winding 1 is located outside the stator slot 22. The part that is of the stator winding 1 and that is located outside the stator slot 22 protrudes from an axial end face of the stator core 2 in an axial direction of the stator 10. A part that is of the stator winding 1 and that protrudes in the axial direction of the stator 10 is referred to as an end winding, and a height H of the end winding affects an axial size of the stator 10.

In this embodiment of this application, the axial direction of the stator 10, the axial direction of the stator core 2, and an axial direction of the motor 100 refer to a same direction. A circumferential direction of the stator 10, the circumferential direction of the stator core 2, and a circumferential direction of the motor 100 refer to a same direction. A radial direction of the stator 10, a radial direction of the stator core 2, and a radial direction of the motor 100 refer to a same direction.

FIG. 3b is an enlarged view of an area A in FIG. 3a. As shown in FIG. 3b, the stator winding 1 includes a plurality of flat wire windings 11. The stator winding 1 is formed by connecting the plurality of flat wire windings 11 in sequence, and ends of two flat wire windings 11 are connected through welding. A part of each flat wire winding 11 is embedded in the stator slot 22 of the stator core 2. Insulation paper 3 is disposed between the flat wire winding 11 and the stator slot 22. For example, in the radial direction of the stator core 2, the plurality of flat wire windings 11 are stacked in the stator slot 22.

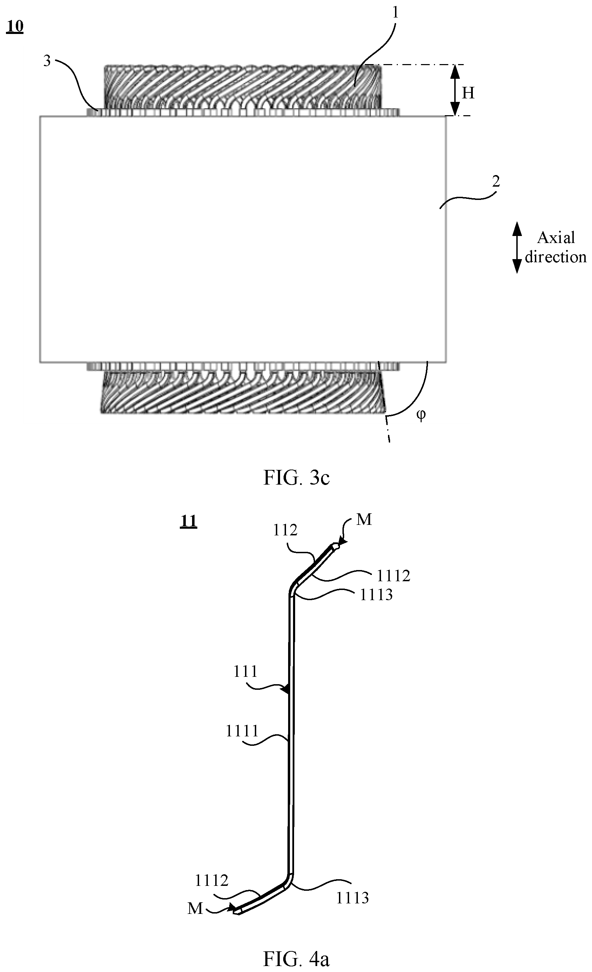

FIG. 3c shows a structure of the stator 10 viewed in the radial direction of the stator 10. In the axial direction of the stator 10, the stator winding 1 is partially exposed outside the end face of the stator core 2, and a height between an end portion of the stator winding 1 and the end face of the stator core 2 is the height H of the end winding. There is an included angle φ between an outer circumferential surface of the end portion of the stator winding 1 and the end surface of the stator core 2, and the included angle φ is less than 90 degrees.

The stator winding 1 provided in this embodiment of this application is formed by connecting a plurality of flat wire windings 11 with bent end portions shown in FIG. 4a. The flat wire winding 11 is configured to be embedded in the stator slot 22 of the stator core 2 shown in FIG. 3a in the radial direction of the stator core 2.

As shown in FIG. 4a, the flat wire winding 11 includes at least one wire segment 111. Each wire segment 111 includes one straight segment 1111 and two folded segments 1112. The straight segment 1111 is configured to be embedded in the stator slot 22 of the stator core 2 in the flat wire motor 100, and the folded segments 1112 are configured to be exposed outside the stator slot 22. An extension direction of each folded segment 1112 intersects an extension direction of the straight segment 1111, and extension directions of the two folded segments 1112 are different.

In an embodiment, an included angle between the folded segment 1112 and the straight segment 1111 in the wire segment 111 is greater than 90 degrees, and the two folded segments 1112 in the wire segment 111 are separately connected to the straight segment 1111 via a bending segment 1113.

For example, FIG. 4a shows the flat wire winding 11 including one wire segment 111. As shown in FIG. 4a, the wire segment 111 includes one straight segment 1111 and two folded segments 1112 respectively connected to two ends of the straight segment 1111. The folded segment 1112 is bent relative to the straight segment 1111, bending directions of the two folded segments 1112 are different, and an included angle between each folded segment 1112 and the straight segment 1111 is greater than 90 degrees. The folded segments 1112 are separately connected to the straight segment 1111 via a bending segment 1113.

As shown in FIG. 4a, the flat wire winding 11 includes an insulation layer 112. For the wire segment 111, the insulation layer 112 wraps an outer surface of the wire segment 111. An end portion M that is of the folded segment 1112 and that is away from the straight segment 1111 is exposed. The end portion M that is of the folded segment 1112 and that is away from the straight segment 1111 is configured to be welded to an end portion M of a folded segment 1112 in another flat wire winding 11.

In an embodiment, a cross-sectional area of the end portion M that is of at least one folded segment 1112 and that is away from the straight segment 1111 is less than both a cross-sectional area of the straight segment 1111 and a cross-sectional area of the folded segment 1112. As shown in FIG. 4a, a cross-sectional area of the end portion M is less than both the cross-sectional area of the straight segment 1111 and the cross-sectional area of the folded segment 1112.

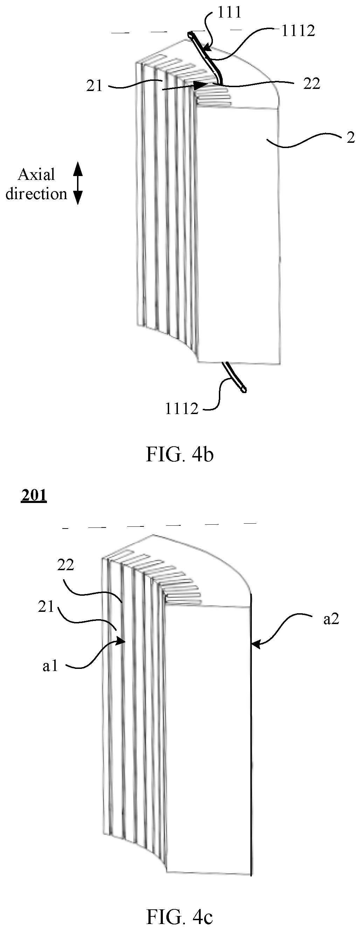

FIG. 4b is a diagram of the flat wire winding 11 shown in FIG. 4a embedded in the stator slot 22 of the stator core 2 in the radial direction of the stator core 2.

As shown in FIG. 4b, the flat wire winding 11 is embedded in the stator slot 22 of the stator core 2 in the radial direction of the stator core 2. The straight segment 1111 of the wire segment 111 is not shown after being accommodated in the stator slot 22, and the two folded segments 1112 of the wire segment 111 extend out of the stator slot 22 of the stator core 2. As shown in FIG. 4b, the included angle between the folded segment 1112 and the straight segment 1111 is greater than 90°. Included angles between the two folded segments 1112 and the straight segment 1111 may be equal or unequal.

In the axial direction of the stator core 2, a distance between an end portion of the stator core 2 and the end portion that is of the folded segment 1112 and that is away from the straight segment 1111 is the height of the end winding. The included angle between the folded segment 1112 and the straight segment 1111 enables the folded segment 1112 to extend out of the stator slot 22.

The flat wire winding 11 provided in this application is performed. Before the flat wire winding 11 is embedded in the stator slot 22 of the stator core 2 in the radial direction of the stator core 2, the folded segment 1112 has implemented a preset bending structure. Therefore, after the flat wire winding 11 is embedded in the stator slot 22 in the radial direction of the stator core 2, the flat wire winding 11 does not need to be processed through twisting, flaring, or cutting. In this way, a wire segment that needs to be clamped does not need to be reserved at an end portion of the flat wire winding 11, so that a distance between the folded segment 1112 and the axial end face of the stator core 2 is reduced. In the circumferential direction of the stator core 2, the plurality of flat wire windings 11 are sequentially connected through welding to form the stator winding 1 shown in FIG. 3a, so that an end portion height of the stator winding 1 can be reduced, and an axial size of the flat wire motor 100 can be reduced.

In an embodiment, the stator core 2 of the flat wire motor 100 includes a plurality of arc-shaped stator core blocks 201. Each arc-shaped stator core block 201 includes at least one stator slot 22. The at least one stator slot 22 of each arc-shaped stator core block 201 is separately configured to embed at least one straight segment 1111 in the radial direction of the flat wire motor 100. A length of each straight segment 1111 is greater than a length of the arc-shaped stator core block 201 in the axial direction of the flat wire motor 100. The plurality of arc-shaped stator core blocks 201 embedded in the at least one straight segment 1111 are sequentially spliced to form the stator core 2 of the flat wire motor 100.

The stator core 2 provided in this embodiment of this application may be formed by sequentially splicing the stator core blocks 201 shown in FIG. 4b or FIG. 4c in the circumferential direction of the stator core 2. Therefore, it is convenient to embed the flat wire winding 11 in the stator slot 22 in the radial direction of the flat wire motor 100.

As shown in FIG. 4c, each stator core block 201 has an inner surface a1 and an outer surface a2. In the circumferential direction of the stator core 2, both the inner surface a1 and the outer surface a2 of the stator core block 201 are arc surfaces centered on an axis of the stator core 2, and center angles of the inner surface a1 and the outer surface a2 are consistent. The plurality of stator core blocks 201 can be circumferentially spliced to form a central hole of the stator core 2.

The stator core block 201 includes a plurality of stator slots 22. Each stator slot 22 penetrates through the stator core block 201 in the axial direction of the stator core 2, and the plurality of stator slots 22 are spaced from each other in the circumferential direction of the stator core 2. Each stator slot 22 is connected to the central hole of the stator core block 201 in the radial direction of the stator core 2. The plurality of stator core blocks 201 are spliced to form the stator core 2, inner surfaces a1 of the plurality of stator core blocks 201 are spliced in the circumferential direction of the stator core 2 to form the central hole of the stator core 2, and outer surfaces a2 of the plurality of stator core blocks 201 are spliced in the circumferential direction of the stator core 2 to form an outer circumferential surface of the stator core block 201.

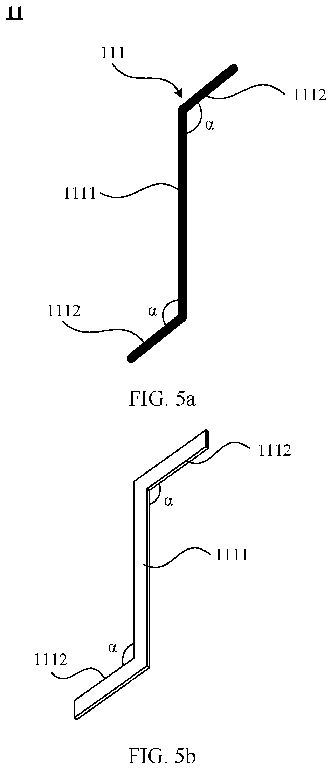

FIG. 5a is a diagram of a simplified structure of the flat wire winding 11 shown in FIG. 4a. For example, the folded segment 1112 is in a straight line shape, an included angle α is formed between the folded segment 1112 and the middle segment 111, and an angle of the included angle α is greater than 90 degrees.

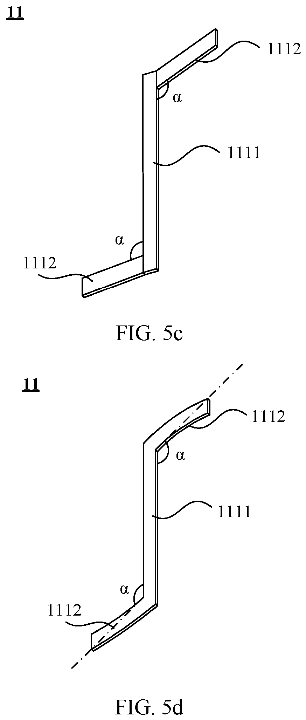

To facilitate connection between the flat wire windings 11, each of the two folded segments 1112 of the flat wire winding 11 extend from an end of the straight segment 1111 in a direction away from an axis of the straight segment 1111, and the two folded segments 1112 extend in different directions. The flat wire winding 11 in a flat wire form shown in FIG. 5b is used as an example. The two folded segments 1112 and the straight segment 1111 are located in a same plane, and there is an included angle α between the extension direction of the folded segment 1112 and the straight line 111. Alternatively, in the flat wire winding 11 in another flat wire form shown in FIG. 5c, the two folded segments 1112 are not in a same plane, and there may be an included angle α between the extension direction of the folded segment 1112 and the straight segment 1111. Alternatively, in the flat wire winding 11 in a flat wire form shown in FIG. 5d, the folded segment 1112 is in an arc shape, and there is an included angle α between a tangent of the folded segment 1112 at a junction with the straight segment 1111 and the extension direction of the straight segment 1111.

The flat wire winding 11 shown in FIG. 5a is used as an example. When the plurality of flat wire windings 11 are head-to-tail connected to form the stator winding 1, an end portion of a folded segment 1112 of a previous flat wire winding 11 can be connected to an end portion of a folded segment 1112 of a next flat wire winding 11.

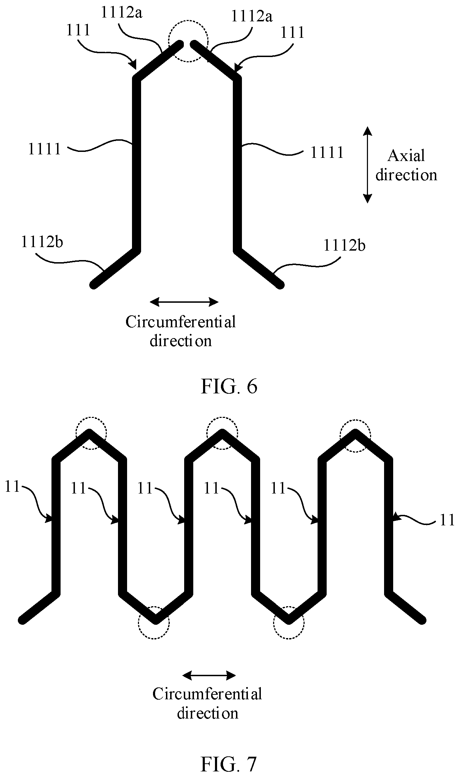

As shown in FIG. 6, in the circumferential direction of the stator core 2, two adjacent flat wire windings 11 are axially symmetrically distributed. In the axial direction of the stator core 2, two folded segments 1112 of each flat wire winding 11 are divided into a folded segment 1112a and a folded segment 1112b. In the axial direction of the stator core 2, folded segments 1112a of the two flat wire windings 11 are located on a same side of straight segments 1111, and folded segments 1112b of the two flat wire windings 11 are located on a same side of the straight segments 1111. For example, a folded segment 1112a of a previous flat wire winding 11 and a folded segment 1112a of a next flat wire winding 11 are close to each other and connected at a dashed circle, so that the two flat wire windings 11 are connected. A folded segment 1112b of the previous flat wire winding 11 is bent in a direction away from the next flat wire winding 11, to facilitate connection to a flat wire winding 11 before the previous flat wire winding 11. A folded segment 1112b of the next flat wire winding 11 is bent in a direction away from the previous flat wire winding 11, to facilitate connection to a flat wire winding 11 after the next flat wire winding 11. After the plurality of flat wire windings 11 are connected in the circumferential direction of the stator core 2, the stator winding 1 shown in FIG. 7 can be formed. Certainly, FIG. 7 shows only a part of the stator winding 1.

The flat wire winding 11 can improve design flexibility of the motor 100. During specific disposing, a structure design between the straight segment 1111 and the folded segment 1112 of the wire segment 111 is changed, so that the plurality of flat wire windings 11 are connected based on different structure forms, to form stator windings 1 in different forms. This improves design flexibility of the motor 100. For example, the plurality of flat wire windings 11 are connected to form a stator of an odd-layer winding, and an interlayer connection and a span connection are performed between different layers of windings.

In specific manufacturing of the stator 10, the flat wire winding 11 may be embedded in the stator slot 22 of the stator core 2 in the radial direction of the stator core 2. For the flat wire winding 11 embedded in the stator slot 22, the straight segment 1111 is located in the stator slot 22, and the two folded segments 1112 are located on an outer side of the axial end face of the stator core 2. After the plurality of flat wire windings 11 are embedded in the stator slot 22 of the stator core 2 according to a winding rule, folded segments 1112 that are close to each other and that are of any two adjacent flat wire windings 11 are welded in the circumferential direction of the stator core 2, to obtain the stator winding 1. The flat wire windings 11 are connected to form the stator winding 1, and the folded segment 1112 is located on an axial end portion of the stator core 2. In the axial direction of the stator core 2, the distance H between the axial end face of the stator core 2 and an end that is of the folded segment 1112 and that is away from the straight segment 1111 is the end portion height of the stator winding 1.

In conclusion, the flat wire winding 11 provided in this embodiment of this application has the bent folded segment 1112 before embedding in the stator slot 22. The end portion of the flat wire winding 11 does not need to be stretched, twisted, or flared after the flat wire winding 11 is embedded in the stator slot 22, and the folded segment 1112 does not need to reserve a large size for stretching, twisting, and flaring. The end that is of the folded segment 1112 and that is away from the straight segment 1111 is equivalent to a solder joint position of the flat wire winding 11. A distance between the solder joint position and the stator core 2 is the height H of the end winding. Compared with a stator winding 1 in the conventional technology, the stator winding 1 in this embodiment of this application has a smaller height, so that the axial size of the stator 10 can be reduced, and a miniaturization design of the motor 100 is facilitated. Because a wire shape of the flat wire winding 11 replaces the twisting and flaring operations after the flat wire winding 11 is embedded in the stator slot 22, when the plurality of flat wire windings 11 are welded to form the stator winding 1, a welding end has higher design flexibility, and design of a busbar and a busbar of the motor 100 can also be simplified. For the motor 100, a small axial size helps implement miniaturization of the motor 100, and can further improve operation efficiency of the motor 100. For production of the motor 100, compared with a conventional wave winding manner, the flat wire winding 11 provided in this embodiment of this application has low production line investment and better compatibility.

In an embodiment, the end portion M that is of the at least one folded segment 1112 of the at least one wire segment 111 and that is away from the straight segment 1111 includes a welding surface P. The cross-sectional area of the end portion M is less than both the cross-sectional area of the straight segment 1111 and the cross-sectional area of the folded segment 1112, and the welding surface P is configured to weld a welding surface P of an end portion M of a folded segment 1112 of a wire segment 111 of another flat wire winding 11.

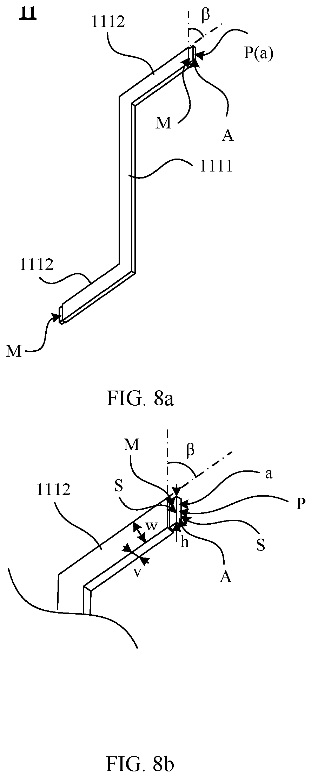

As shown in FIG. 8a, the end portion M of the folded segment 1112 of the wire segment 111 includes the welding surface P. The welding surface P is configured to weld a welding surface P of an end portion M of a folded segment 1112 of a wire segment 111 of another flat wire winding 11.

In an embodiment, a welding surface P of a wire segment 111 of a flat wire winding 11 in the stator winding 1 is welded to a welding surface P of a wire segment 111 of another flat wire winding 11. The two welding surfaces P welded to each other are arranged adjacently in the radial direction of the flat wire motor 100 or in the circumferential direction of the flat wire motor 100.

In an embodiment, both the cross-sectional area of the straight segment 1111 in the wire segment 111 and cross-sectional areas of the two folded segments 1112 in the wire segment 111 are less than an area of the welding surface P.

In an embodiment, the end portion M of the folded segment 1112 includes an end face A facing the circumferential direction of the flat wire motor 100 and a side surface B facing the radial direction of the flat wire motor 100.

In an embodiment, the end face A that is of the end portion M of the folded segment 1112 and that faces the circumferential direction of the flat wire motor 100 includes the welding surface P. As shown in FIG. 8a, the end face A that is of the end portion M of the folded segment 1112 and that faces the circumferential direction of the flat wire motor 100 includes the welding surface P, and an angle β between the welding surface P and the extension direction of the folded segment 1112 is less than 90 degrees. The flat wire winding 11 shown in FIG. 8a is applicable to welding of two adjacent flat wire windings 11 in the circumferential direction of the stator core 2. Two wire segments 111 that need to be welded to each other are embedded in the stator slot 22 of the stator core 2, and welding surfaces P of the two wire segments 111 that need to be welded to each other are opposite to each other in the radial direction of the flat wire motor 100 or in the circumferential direction of the flat wire motor 100. This facilitates a welding operation of a worker, and further improves welding reliability, thereby improving performance and reliability of the flat wire motor 100.

In an embodiment, the end portion M of the folded segment 1112 in the wire segment 111 includes a tangent plane a. The tangent plane a includes the welding surface P, and an area of the tangent plane a is less than both the cross-sectional area of the straight segment 1111 in the wire segment 111 and the cross-sectional area of the folded segment 1112 in the wire segment 111. In an embodiment, the area of the tangent plane a is greater than or equal to the area of the welding surface P.

As shown in FIG. 8a, the end face A includes the tangent plane a formed by cutting the folded segment 1112 in the axial direction of the flat wire motor 100. The area of the tangent plane a is greater than both the cross-sectional area of the straight segment 1111 in the wire segment 111 and the cross-sectional areas of the two folded segments 1112 in the wire segment 111. Correspondingly, the tangent plane a formed by obliquely cutting the folded segment 1112 may increase a welding area, and improve stability of the flat wire motor 100.

As shown in FIG. 8b, the tangent plane a or the welding surface P includes two side edges S arranged opposite to each other in a thickness direction of the folded segment 1112, and a length h of each of the two side edges S is greater than a width w of the folded segment 1112. A spacing between the two side edges S is less than or equal to a thickness v of the folded segment 1112.

In this embodiment of this application, a thickness of the straight segment 1111 or the thickness of the folded segment 1112 is a size in the radial direction of the flat wire motor 100 after the wire segment 111 is embedded in the stator slot 22. The thickness of the straight segment 1111 or the thickness of the folded segment 1112 is a size in the circumferential direction of the flat wire motor 100 after the wire segment 111 is embedded in the stator slot 22.

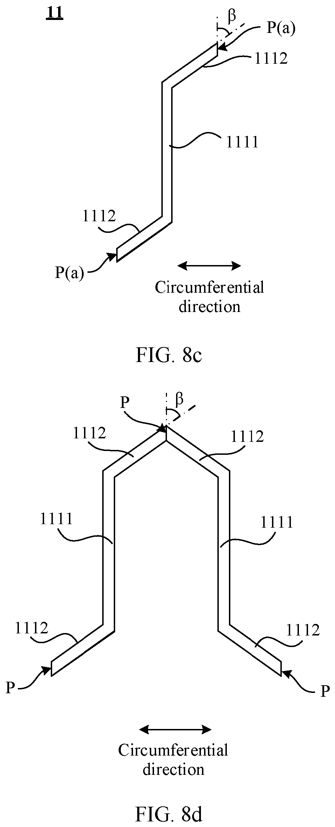

In an embodiment, the tangent plane a or the welding surface P faces the circumferential direction of the flat wire motor 100. FIG. 8c is a diagram of a simplified structure of the flat wire winding 11 viewed parallel to the welding surface P. Refer to FIG. 8a and FIG. 8c. The folded segment 1112 is inclined or deviated in the circumferential direction of the stator core 2, there is the included angle β between the welding surface P and the extension direction of the folded segment 1112, and the welding surface P is basically perpendicular to the circumferential direction of the stator core 2. Refer to FIG. 8c. The tangent plane a or the welding surface P is parallel to the thickness direction of the folded segment 1112 and perpendicular to a width direction of the folded segment 1112.

In an embodiment, in the circumferential direction of the flat wire motor 100, welding surfaces P of end portions M of two folded segments 1112 in a same wire segment 111 face approximately opposite directions. As shown in FIG. 8c, welding surfaces P of end portions M of two folded segments 1112 in a same wire segment 111 face opposite directions in the circumferential direction of the flat wire motor 100.

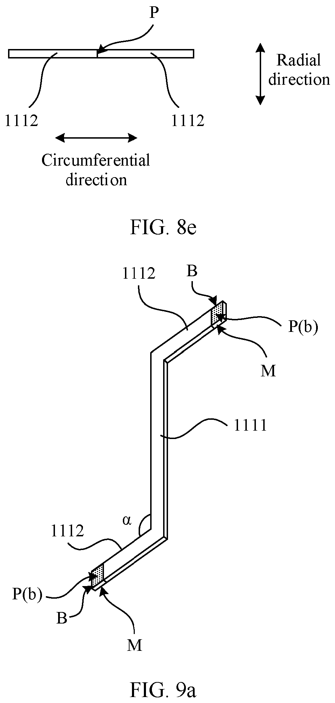

In an embodiment, end faces A or tangent planes a on which the two welding platforms P welded to each other are located are arranged adjacently in the circumferential direction of the flat wire motor 100. As shown in FIG. 8d, one welding surface P and the other welding surface P are welded to each other in the circumferential direction of the stator core 2. The two welding surfaces P are arranged adjacently in the circumferential direction of the stator core 2. FIG. 8e shows a top view in which two flat wire windings 11 are welded. As shown in FIG. 8e, the welding platforms P of the two flat wire windings 11 are welded to each other, and the two welding platforms P welded to each other are arranged adjacently in the circumferential direction of the flat wire motor 100. The two welding platforms P welded to each other are perpendicular to the circumferential direction of the flat wire motor 100 and parallel to the radial direction of the flat wire motor 100 or the radial direction of the stator core 2. As shown in FIG. 8e, the two welding platforms P that are arranged adjacently in the circumferential direction of the flat wire motor 100 can facilitate welding of two flat wire windings 11 arranged at a same layer in the radial direction of the flat wire motor 100. The flat wire winding 11 does not need to be further processed through twisting, flaring, or cutting, and a wire segment that needs to be clamped does not need to be reserved at the end portion of the flat wire winding 11. Therefore, a distance between the folded segment 1112 and the axial end face of the stator core 2 is reduced, and the axial size of the flat wire motor 100 is reduced.

In an embodiment, the side surface B that is of the end portion M of the folded segment 1112 and that faces the radial direction of the flat wire motor 100 includes the welding surface P. As shown in FIG. 9a, the side surface B that is of the end portion M of the folded segment 1112 and that faces the radial direction of the flat wire motor 100 includes the welding surface P. For example, the welding surface P is parallel to the extension direction of the folded segment 1112. The welding surface P is located on the side surface that is of the end portion M of the folded segment 1112 and that faces the radial direction of the flat wire motor 100, so that the area of the welding surface P may be greater than both the cross-sectional area of the straight segment 1111 in the wire segment 111 and the cross-sectional areas of the two folded segments 1112 in the wire segment 111. Therefore, a welding area can be increased, and stability of the flat wire motor 100 can be improved.

In an embodiment, the side surface B that is of the folded segment 1112 in the wire segment 111 and that faces the radial direction of the flat wire motor 100 includes a tangent plane b. The tangent plane b includes a welding surface P, and an area of the tangent plane b is greater than both the cross-sectional area of the straight segment 1111 in the wire segment 111 and the cross-sectional area of the folded segment 1112 in the wire segment 111. In an embodiment, the area of the tangent plane b is greater than or equal to the area of the welding surface P. As shown in FIG. 9a, the tangent plane b is formed by cutting the side surface B of the end portion M of the folded segment 1112, and the area of the tangent plane b is greater than both the cross-sectional area of the straight segment 1111 in the wire segment 111 and the cross-sectional areas of the two folded segments 1112 in the wire segment 111. Correspondingly, the tangent plane b formed by cutting the folded segment 1112 may increase a welding area, and improve stability of the flat wire motor 100.

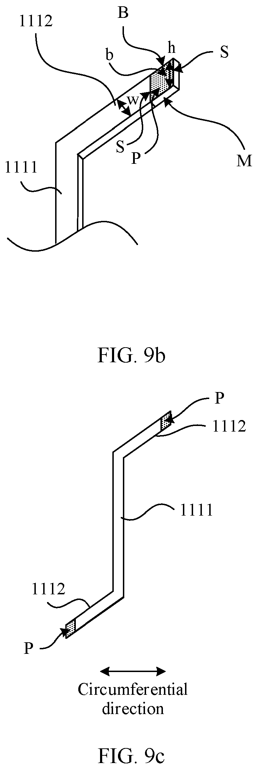

As shown in FIG. 9b, the tangent plane a or the welding surface P includes two side edges S arranged opposite to each other in the extension direction of the folded segment 1112, and a length h of each of the two side edges S is greater than the width of the folded segment 1112.

In an embodiment, the tangent plane a or the welding surface P faces the radial direction of the flat wire motor 100. As shown in FIG. 9c, a simplified structure of the flat wire winding 11 is viewed in a direction perpendicular to the welding surface P. The welding surface P is located on a surface in the thickness direction of the folded segment 1112, and the welding surface P is basically perpendicular to the radial direction of the stator core 2.

In an embodiment, welding surfaces P of end portions M of two folded segments 1112 in a same wire segment 111 face opposite or same directions. As shown in FIG. 9c, the welding surfaces P of the end portions M of the two folded segments 1112 in the same wire segment 111 are located on a same side in the thickness direction of the flat wire winding 11. The welding surfaces P of the end portions M of the two folded segments 1112 in the same wire segment 111 face a same direction. Correspondingly, welding surfaces P of the end portions M of the two folded segments 1112 in the same wire segment 111 are located on different sides of the flat wire winding 11 in the thickness direction. Welding surfaces P of the end portions M of the two folded segments 1112 in the same wire segment 111 face opposite directions.

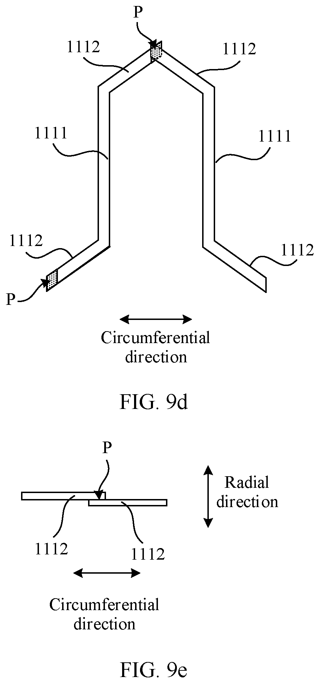

In an embodiment, the two welding platforms P welded to each other are arranged adjacently in the radial direction of the flat wire motor 100. As shown in FIG. 9d, one welding surface P and the other welding surface P are welded to each other in the radial direction of the stator core 2. The two welding surfaces P are arranged adjacently in the radial direction of the stator core 2. Shadows in a dashed-line box in FIG. 9d show an example of a part in which the two welding surfaces P are in contact. FIG. 9e is a top view of the two flat wire windings 11. The welding platforms P of the two flat wire windings 11 are welded to each other, and the two welding platforms P welded to each other are arranged adjacently in the radial direction of the flat wire motor 100. The two welding platforms P welded to each other are parallel to the circumferential direction of the flat wire motor 100 and perpendicular to the radial direction of the flat wire motor 100 or the radial direction of the stator core 2. As shown in FIG. 9e, the two welding platforms P that are arranged adjacently in the radial direction of the flat wire motor 100 can facilitate welding of two flat wire windings 11 arranged across layers in the radial direction of the flat wire motor 100. The flat wire winding 11 does not need to be further processed through twisting, flaring, or cutting, and a wire segment that needs to be clamped does not need to be reserved at an end portion of the flat wire winding 11. Therefore, a distance between the folded segment 1112 and the axial end face of the stator core 2 is reduced, and the axial size of the flat wire motor 100 is reduced.

The two flat wire windings 11 are stacked in the radial direction of the stator core 2, so that the welding surfaces P on the two flat wire windings 11 can be opposite and welded to each other in the radial direction of the stator core 2. It should be understood that, when the two flat wire windings 11 are connected through welding in the radial direction of the stator core 2, the welding surfaces P of the two flat wire windings 11 need to be opposite to each other in the radial direction of the stator core 2. When the flat wire winding 11 is embedded in the stator slot 22, a relative position relationship between the two flat wire windings 11 to be welded needs to be designed and adjusted.

In an embodiment, the end portion of the folded segment 1112 includes a tangent plane D that faces the radial direction of the flat wire motor 100, and the tangent plane D is perpendicular to the welding surface P.

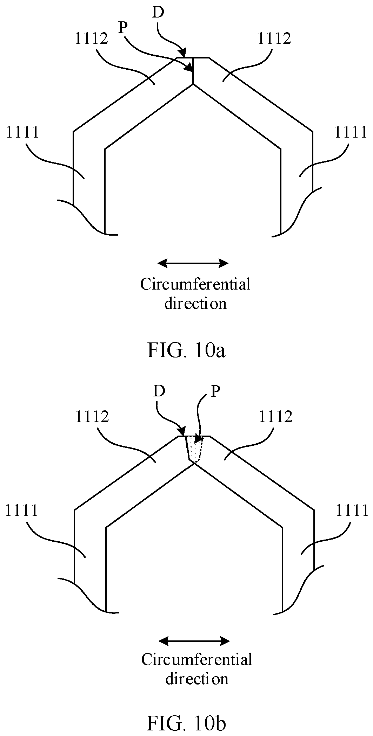

As shown in FIG. 10a and FIG. 10b, a part that is of the end portions M of the two folded segments 1112 welded to each other and that is away from the straight segment 1111 in the radial direction of the flat wire motor 100 is cut to form the tangent plane D, and the tangent plane D is perpendicular to the welding surface P and parallel to the circumferential direction of the stator core 2. The tangent plane D may shorten a height at which the flat wire winding 11 extends out of the stator slot 22, or may weaken a sharpness of an end portion that is of the flat wire winding 11 and that is exposed outside a circumferential end face of the stator core 2, to improve assembly and manufacturing safety.

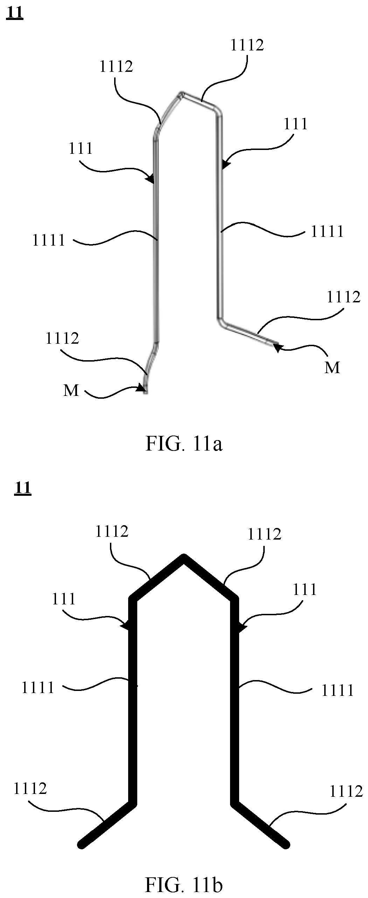

As shown in FIG. 11a, the flat wire winding 11 includes two head-to-tail connected wire segments 111, and an end of a folded segment 1112 that is of a wire segment 111 and that is away the other wire segment 111 is a welding end of the flat wire winding 11. Two ends of the flat wire winding 11 are two welding ends. The flat wire winding 11 may be formed by bending a conducting wire. During application, the flat wire winding 11 needs to be arranged in the circumferential direction of the stator core 2. Therefore, in the flat wire winding 11 herein, two folded segments 1112 that are of the two wire segments 111 and that are away from each other are distributed in a three-dimensional manner. In an embodiment, an angle or an orientation of a folded segment 1112 of one or more wire segments 111 in the flat wire winding 11 relative to the straight segment 1111 is different from an angle or an orientation of a folded segment 1112 of another wire segment 111 relative to the straight segment 1111. This facilitates an interlayer connection between the flat wire windings 11.

For ease of understanding, FIG. 11b is a plane diagram of a simplified structure of the flat wire winding 11 shown in FIG. 11a. In FIG. 11b, the two wire segments 111 of the flat wire winding 11 are symmetrically arranged in the axial direction of the stator core 2. It should be understood that the axial symmetry herein is merely for ease of understanding, and does not limit a specific structure of the two wire segments 111 in practice.

As shown in FIG. 11b, a plurality of flat wire windings 11 are head-to-tail connected to form the stator winding 1. An end portion of a folded segment 1112 of a previous flat wire winding 11 can be connected to an end portion of a folded segment 1112 of a next flat wire winding 11.

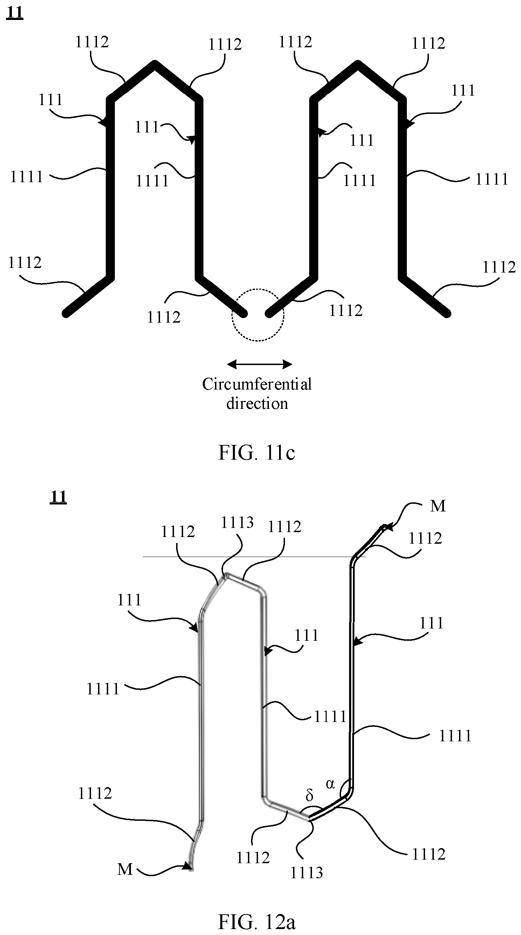

As shown in FIG. 11c, in the circumferential direction of the stator core 2, two adjacent flat wire windings 11 are axially symmetrically distributed. In the axial direction of the stator core 2, the folded segments 1112 of the two flat wire windings 11 are located on a same side of the straight segments 1111. The folded segments of the two flat wire windings 11 are close to each other and connected at a dashed-line circle, so that the two flat wire windings 11 are connected.

In an embodiment, the flat wire winding 11 includes a plurality of wire segments 111. In any two adjacent wire segments 111, a folded segment 1112 of a wire segment 111 is connected to a folded segment 1112 of the other wire segment 111 via another bending segment 1113.

As shown in FIG. 12a, the flat wire winding 11 includes three head-to-tail connected wire segments 111. In any two adjacent wire segments 111, a folded segment 1112 of a wire segment 111 is connected to a folded segment 1112 of the other wire segment 111 via another bending segment 1113.

In an embodiment, an included angle between two folded segments 1112 connected to each other in two adjacent wire segments 111 is less than an included angle between each folded segment 1112 and a straight segment 1111 in a same wire segment 111.

As shown in FIG. 12a, an included angle δ between two folded segments 1112 connected to each other in two adjacent wire segments 111 is less than an included angle α between each folded segment 1112 and a straight segment 1111 in a same wire segment 111.

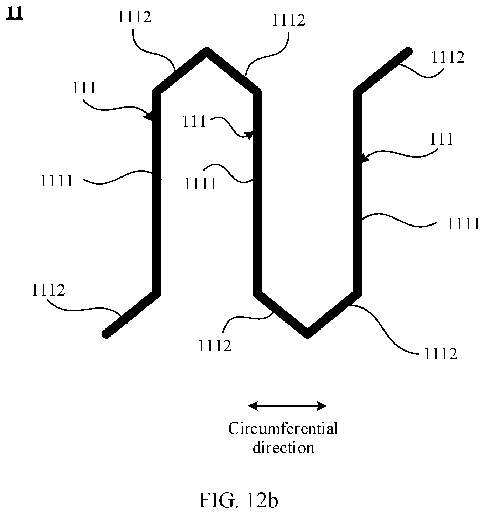

As shown in FIG. 12a, an end of a folded segment 1112 that is of the first or last wire segment 111 and that is away from the middle wire segment 111 is a welding end of the flat wire winding 11. Two ends of the flat wire winding 11 are two welding ends. The flat wire winding 11 may be formed by bending a conducting wire. For ease of understanding, FIG. 12b is a plane diagram of a simplified structure of the flat wire winding 11 shown in FIG. 12a.

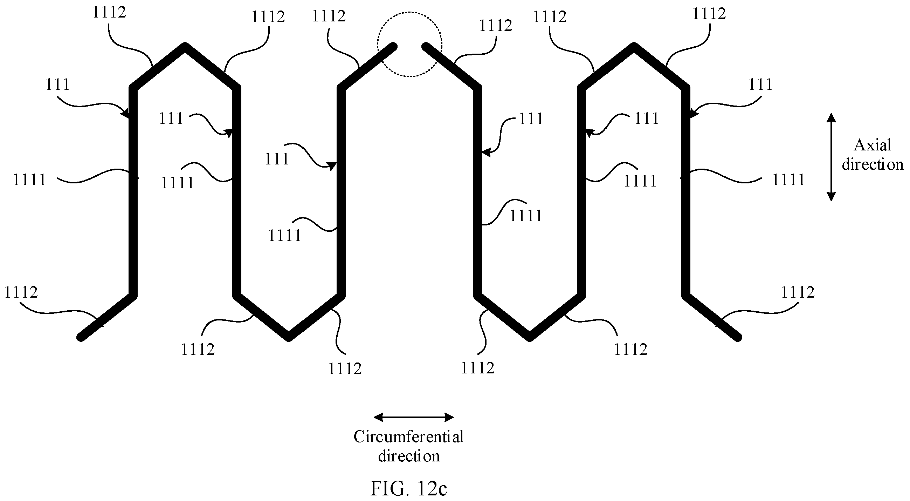

When a plurality of flat wire windings 11 shown in FIG. 12b are head-to-tail connected to form a stator winding 1, an end portion of a folded segment 1112 of the previous flat wire winding 11 can be connected to an end portion of a folded segment 1112 of the next flat wire winding 11. As shown in FIG. 12c, in the circumferential direction of the stator core 2, two adjacent flat wire windings 11 are axially symmetrically distributed. Folded segments 1112 that are of the two flat wire windings 11 and that are close to each other are connected at a dashed-line circle, so that the two flat wire windings 11 are connected.

It should be understood that the flat wire winding 11 shown in FIG. 11a, the flat wire winding 11 shown in FIG. 12a, and the flat wire winding 11 shown in FIG. 4a are different in quantities of wire segments 111. For a welding connection manner between any two flat wire windings 11 and a structure, refer to the foregoing embodiment for description and implementation. Details are not described herein again.

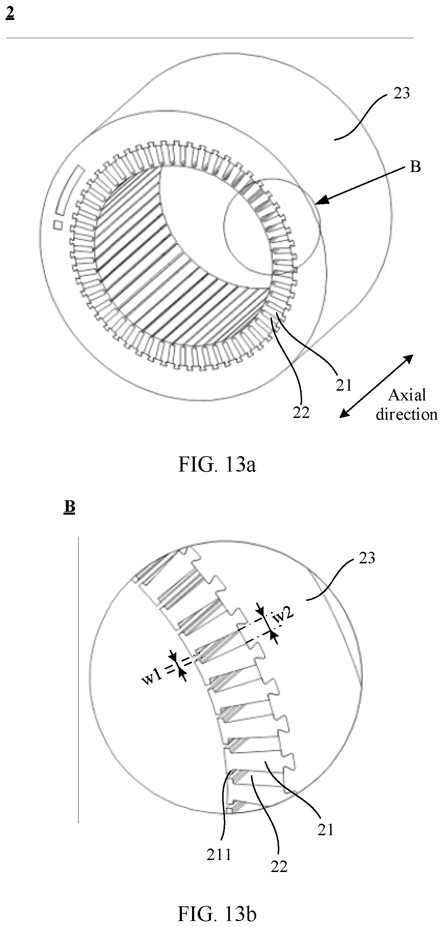

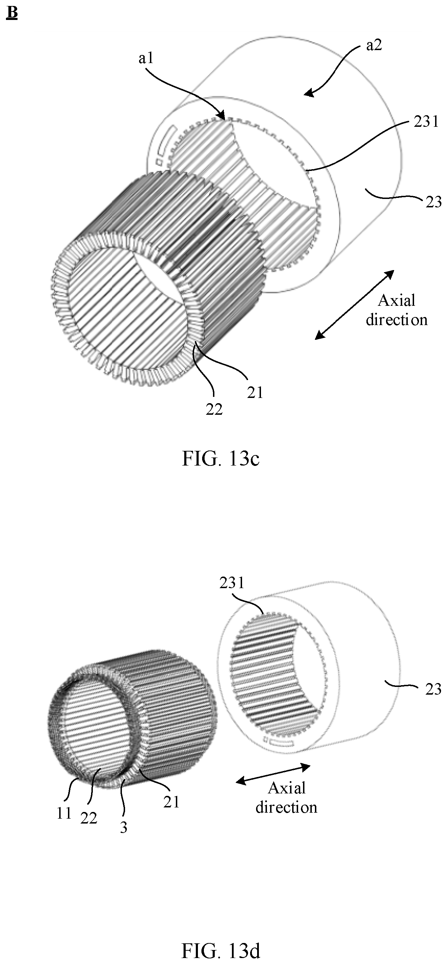

FIG. 13a is another diagram of a motor stator according to an embodiment of this application. FIG. 13b is an enlarged view of an area B in FIG. 13a. FIG. 13c is a diagram of the stator core according to an embodiment of this application. FIG. 13d is another diagram of the motor stator according to an embodiment of this application.

Refer to both FIG. 13a and FIG. 13b. The stator core 2 includes a plurality of stator teeth 21 and an annular yoke part 23. In the radial direction of the stator 10, an inner surface of the yoke part 23 faces the central hole of the stator core 2, an outer surface of the yoke part 23 faces away from the central hole of the stator core 2, and the inner surface of the yoke part 23 includes a plurality of mounting grooves 231. The plurality of mounting grooves 231 are spaced from each other in the circumferential direction of the stator 10.

As shown in FIG. 13a and FIG. 13b, the yoke part 23 is annular, and the plurality of stator teeth 21 are mounted on an inner side of the yoke part 23. In the circumferential direction of the stator 10, a gap between any two stator teeth 21 is the stator slot 22. In the radial direction of the stator 10, an end that is of each stator tooth 21 and that is away from the yoke part 23 has a protrusion 211 protruding in the circumferential direction of the stator 10. The protrusion 211 can prevent a winding conducting wire 1 embedded in the stator slot 22 from falling out of the stator slot 22. Due to the protrusion 211, a circumferential size w2 of an end that is of the stator slot 22 and that is close to the yoke part 23 is greater than a circumferential size w1 of an end that is of the stator slot 22 and that is away from the yoke part 23. Further, with reference to FIG. 13c, in the radial direction of the stator 10, the yoke part 23 includes an inner surface a1 and an outer surface a2, the inner surface a1 is provided with a plurality of mounting grooves 231, and the plurality of mounting grooves 231 are spaced from each other in the circumferential direction of the stator 10. The plurality of stator teeth 21 may be embedded in the plurality of mounting grooves 231 in a one-to-one correspondence in the axial direction of the stator 10, to finally present the structure shown in FIG. 13a. The one-to-one correspondence means that one stator tooth 21 is uniquely and correspondingly embedded in one mounting groove 231.

As shown in FIG. 13d, the plurality of stator teeth 21 are first spaced from each other in the circumferential direction of the stator 10 via a fixture, and the stator slot 22 is formed between any two stator teeth 21 connected to each other. Then, the insulation paper 3 is placed in each stator slot 22, and the plurality of winding conducting wires 11 are embedded in the plurality of stator slots 22 in the radial direction of the stator 10. A direction in which the winding conducting wire 11 is embedded in the stator slot 22 is a direction in which an outer diameter of the stator 10 points to an inner diameter, that is, the winding conducting wire 11 is embedded in the stator slot 22 from an end that is of the stator slot 22 and that faces the yoke part 23, to prevent the protrusion 211 at the end that is of the stator slot 22 and that is away from the yoke part 23 from causing inconvenience to radial insertion of the winding conducting wire 11.

According to a final structure shape of the stator winding 1, one or more winding conducting wires 11 may be correspondingly embedded in each stator slot 22. Then, the fixture is operated to mount the plurality of stator teeth 21 embedded with the plurality of winding conducting wires 11 to the yoke part 23 in the axial direction of the stator 10. In this way, each stator tooth 21 may be embedded in the mounting groove 231 of the yoke part 23 in the axial direction of the stator 10. After the stator teeth 21 and the yoke part 23 are mounted, the plurality of winding conducting wires 11 are welded together according to a winding requirement of the stator winding 1, and the stator 10 is manufactured after varnish coating. It should be understood that, for ease of example, the fixture for fastening the plurality of stator teeth 21 is not shown in FIG. 13d.

In an embodiment, in the stator 10 provided in this embodiment of this application, the stator core 2 is formed by splicing the annular yoke part 23 and the plurality of stator teeth 21. The plurality of winding conducting wires 11 may be first separately embedded in the plurality of stator slots 22 formed by the plurality of arranged stator teeth 21, and then the plurality of stator teeth 21 are spliced to the yoke part 23 in the axial direction of the stator 10. Then, the plurality of winding conducting wires 11 are welded according to a winding rule of the stator winding 1, to form the stator winding 1. In a process of forming the stator winding 1, the stator 10 provided in this application does not need to be stretched, twisted, or flared. Therefore, a wire segment that needs to be clamped does not need to be reserved at the end portion of the winding conducting wire 11. In this way, the end portion height of the stator winding 1 is reduced.

In an embodiment, in the stator 10 provided in this embodiment of this application, the stator core 2 is formed by splicing the annular yoke part 23 and the plurality of stator teeth 21. The plurality of winding conducting wires 11 may be first separately embedded in the plurality of stator slots 22 formed by the plurality of arranged stator teeth 21, and then the plurality of winding conducting wires 11 are welded according to the winding rule of the stator winding 1 to form the stator winding 1. Then, the plurality of stator teeth 21 are spliced to the yoke part 23 in the axial direction of the stator 10. In a process of forming the stator winding 1, the stator 10 provided in this application does not need to be stretched, twisted, or flared. Therefore, a wire segment that needs to be clamped does not need to be reserved at the end portion of the winding conducting wire 11. In this way, the end portion height of the stator winding 1 is reduced.

In an embodiment, the plurality of stator teeth 21 in the stator 10 provided in this embodiment of this application jointly form a tooth part 21 of the stator core 2, and the plurality of stator teeth 21 are connected to form the annular tooth part. In an embodiment, the stator core 2 includes the annular tooth part, and the tooth part includes the plurality of stator teeth 21 spaced from each other in the circumferential direction of the stator 10. In the radial direction of the stator 10, the tooth part includes an inner surface and an outer surface. The outer surface of the tooth part 21 includes the plurality of stator teeth 21. In the circumferential direction of the stator 10, a gap between any two adjacent stator teeth 21 is used to form the stator slot 22. Each stator slot 22 is configured to embed at least one straight segment 1111 in the radial direction of the stator 10. The tooth part embedded in the at least one straight segment 1111 is embedded in the plurality of mounting grooves 231 of the yoke part 23 in the axial direction of the stator 10. The plurality of stator teeth 21 are respectively embedded in the plurality of mounting grooves 231. In a process of forming the stator winding 1, the stator 10 provided in this application does not need to be stretched, twisted, or flared. Therefore, a wire segment that needs to be clamped does not need to be reserved at the end portion of the winding conducting wire 11. In this way, the end portion height of the stator winding 1 is reduced.

Clearly, a person skilled in the art can make various modifications and variations to this application without departing from the scope of this application. This application is intended to cover these modifications and variations of this application provided that they fall within the scope of protection defined by the following claims and their equivalent technologies.

## Claims

1. A stator of a flat wire motor, wherein the stator comprises a stator core and a stator winding, the stator winding comprises a plurality of flat wire windings, at least one flat wire winding comprises at least one wire segment, and each wire segment comprises:
one straight segment, wherein the straight segment is configured to be embedded in a stator slot of the stator core in the flat wire motor; and
two folded segments, wherein the two folded segments are configured to be exposed outside the stator slot, an extension direction of each folded segment intersects an extension direction of the straight segment, extension directions of the two folded segments are different, an end portion that is of at least one folded segment and that is away from the straight segment comprises a welding surface, and a cross-sectional area of the end portion is less than a cross-sectional area of the straight segment.

2. The stator according to claim 1, wherein an end face that is of an end portion of one folded segment and that faces a circumferential direction of the flat wire motor comprises one tangent plane, the tangent plane comprises one welding surface, and an area of the tangent plane is greater than a cross-sectional area of the folded segment.

3. The stator according to claim 2, wherein the one tangent plane or the one welding surface comprises two side edges arranged opposite to each other in a thickness direction of the folded segment, and a length of each of the two side edges is greater than a width of the folded segment.

4. The stator according to claim 1, wherein a side surface that is of an end portion of one folded segment and that faces a radial direction of the flat wire motor comprises one tangent plane, the tangent plane comprises one welding surface, and an area of the tangent plane is greater than a cross-sectional area of the folded segment.

5. The stator according to claim 4, wherein the one tangent plane or the one welding surface comprises two side edges arranged opposite to each other in an extension direction of the folded segment, and a length of each of the two side edges is greater than a width of the folded segment.

6. The stator according to any one of claims 2 to 5, wherein welding surfaces of end portions of two folded segments in one wire segment face opposite directions.

7. The stator according to any one of claims 2 to 6, wherein the end portion of the folded segment comprises another tangent plane facing an axial direction of the flat wire motor, and the another tangent plane is perpendicular to the welding surface.

8. The stator according to any one of claims 1 to 7, wherein an included angle between a folded segment and a straight segment in one wire segment is greater than 90 degrees, and two folded segments in the wire segment are separately connected to the straight segment via a bending segment.

9. The stator according to any one of claims 1 to 8, wherein the flat wire winding comprises a plurality of wire segments that are sequentially connected, and a folded segment of one of two wire segments connected to each other is connected to a folded segment of the other wire segment via another bending segment.

10. The stator according to claim 9, wherein an included angle between the two folded segments connected to each other in the two wire segments connected to each other is less than an included angle between each folded segment and a straight segment in a same wire segment.

11. The stator according to claim 1, wherein the stator core comprises a plurality of arc-shaped stator core blocks, and each arc-shaped stator core block comprises at least one stator slot, wherein
the at least one stator slot of each arc-shaped stator core block is respectively configured to be embedded in at least one straight segment, and a length of each straight segment is greater than a length of the arc-shaped stator core block in an axial direction of the flat wire motor; and
the plurality of arc-shaped stator core blocks embedded in the at least one straight segment are sequentially spliced to form the stator core.

12. The stator according to claim 1, wherein the stator core comprises a plurality of stator teeth and an annular yoke part, wherein
in a radial direction of the stator, an inner surface of the yoke part faces a central hole of the stator core, an outer surface of the yoke part faces away from the central hole of the stator core, the inner surface of the yoke part comprises a plurality of mounting grooves, and the plurality of mounting grooves are spaced from each other in a circumferential direction of the stator; and
a gap between any two adjacent stator teeth in the circumferential direction of the stator is used to form the stator slot, each stator slot is used to embed the at least one straight segment in the radial direction of the stator, and the plurality of stator teeth embedded in the at least one straight segment are respectively configured to be embedded in the plurality of mounting grooves of the yoke part in an axial direction of the stator.

13. A flat wire motor, wherein the flat wire motor comprises a rotor and the stator according to any one of claims 1 to 12, a welding surface of a wire segment of one flat wire winding is welded to a welding surface of a wire segment of another flat wire winding, and the welding surfaces of the two wire segments welded to each other are arranged adjacently in the radial direction of the flat wire motor or in the circumferential direction of the flat wire motor.

14. A powertrain, wherein the powertrain comprises the flat wire motor according to claim 13 and either a reducer or a gearbox, and a motor shaft of the flat wire motor is configured to be in transmission connection to an input shaft of the reducer or an input shaft of the gearbox.

15. A flat wire winding comprising a folded segment with a welding surface, wherein the flat wire winding comprises at least one wire segment, and each wire segment comprises:
one straight segment, wherein the straight segment is configured to be embedded in a stator slot of a stator core in a flat wire motor; and
two folded segments, wherein the two folded segments are configured to be exposed outside the stator slot, an extension direction of each folded segment intersects an extension direction of the straight segment, extension directions of the two folded segments are different, an end portion that is of at least one folded segment and that is away from the straight segment comprises a welding surface, and a cross-sectional area of the end portion is less than a cross-sectional area of the straight segment.
